Europäisches Patentamt

European Patent Office

Office européen des brevets

(19)

(11) Veröffentlichungsnummer : **0 603 228 B1**

## (12) EUROPÄISCHE PATENTSCHRIFT

(45) Veröffentlichungstag der Patentschrift :
**30.08.95 Patentblatt 95/35**

(51) Int. Cl.⁶ : **G06F 9/44**

(21) Anmeldenummer : **92918525.4**

(22) Anmeldetag : **01.09.92**

(86) Internationale Anmeldenummer :
**PCT/EP92/02012**

(87) Internationale Veröffentlichungsnummer :
**WO 93/05472 18.03.93 Gazette 93/08**

(54) **VERFAHREN ZUM SUCHEN NACH EINEM MIT EINEM SUCHOBJEKT IDENTISCHEN ODER ÄHNLICHEN OBJEKT IN EINER OBJEKTBIBLIOTHEK--------------.**

(30) Priorität : **12.09.91 EP 91115492**

(43) Veröffentlichungstag der Anmeldung :
**29.06.94 Patentblatt 94/26**

(45) Bekanntmachung des Hinweises auf die
Patenterteilung :
**30.08.95 Patentblatt 95/35**

(84) Benannte Vertragsstaaten :
**DE FR GB**

(56) Entgegenhaltungen :
**CONFERENCE PROCEEDINGS FIFTH AN-
NUAL INTERNATIONAL PHOENIX CONFE-
RENCE ON COMPUTERS AND
COMMUNICATIONS '86 26. März 1986, SCOTT-
SDALE, AZ, US Seiten 445-449 H. KATOH ET
AL. 'LOGIC-BASED RETRIEVAL AND REUSE
OF SOFTWARE MODULES'**

(56) Entgegenhaltungen :
**PROCEEDINGS COMPSAC 88 THE TWELFTH
ANNUAL INTERNATIONAL COMPUTER SOFT-
WARE & APPLICATIONS CONFERENCE 5. Oktober 1988, CHICAGO, IL, US Seiten 361-368
S.HONG ET AL ."DATABASE DESIGN TOOL
GENERATION VIA SOFTWARE REUSABILI-
TY"
AT & T TECHNICAL JOURNAL. Bd. 67, Nr. 4,
Juli 1988, SHORT HILLS, NJ, US Seiten 77-92
D.G. BELANGER ET AL. 'SOME RESEARCH
DIRECTIONS FOR LARGE-SCALE SOFTWARE
DEVELOPMENT'**

(73) Patentinhaber : **SIEMENS
AKTIENGESELLSCHAFT
Wittelsbacherplatz 2
D-80333 München (DE)**

(72) Erfinder : **MEGGENDORFER, Sigi
Waldstrasse 3
D-80630 Grasbrunn (DE)**
Erfinder : **MANHART, Peter
Siedlungsstrasse 10
D-89275 Elchingen (DE)**
Erfinder : **MAYR, Klaus
Auerfeldstrasse 22
D-81541 München (DE)**
Erfinder : **QIU, Zongyan
Connollystrasse 9
D-80809 München (DE)**
Erfinder : **BAUMGARTNER, Peter
Friedrich-Ebert-Ring
D-56068 Koblenz (DE)**

## Beschreibung

Verfahren zum Suchen nach einem mit einem Suchobjekt identischen oder ähnlichen Objekt in einer Objektbibliothek

Bei der Entwicklung großer Softwaresysteme werden ausgehend von zunächst informell gegebenen Systemanforde-rungen Spezifikationen auf immer detaillierteren Ebenen formuliert. Die Entwurfsphase endet im allgemeinen auf einer Ebene, in der Input/Output-Bedingungen für einzelne Funktionen und Prozeduren spezifiziert werden. Typischerweise wird auf dieser Ebene nur der Funktionalität und Komplexität der gewünschten Software, nicht aber implementierungstechnische Details, wie Lösungsalgorithmen, Programmiersprachen und Maschinenabhängigkeiten, Rechnung getragen.

In der auf die Entwurfsphase folgenden Implementierungs phase werden algorithmische Lösungen konzipiert und schließlich codiert. Durch Wiederverwendung von Software kann nun diese Phase, in der immer wieder die gleichen Algorithmen und Programme in verschiedensten Varianten entstehen, wesentlich beschleunigt werden. Der Programmierer möchte eigentlich nur noch die Input/Output-Bedingungen formulieren und von der Aufgabe entbunden werden, Funktionen und Module entweder selbst zu erstellen oder aus Katalogen von Softwarebibliotheken herauszusuchen. Ziel ist es darum, daß Heraussuchen von Programmkomponenten aus Bibliotheken mit Hilfe eines Software-Wiedergewinnungsverfahrens zu erleichtern. Ein solches Verfahren hätte zwei Vorteile, zum einen werden die Kosten für die Implementierungsphase erheblich gesenkt, zum anderen reduzieren sich auch die Kosten für das Testen und Warten der entstehenden Software.

In einigen Teilgebieten der Programmierung, etwa bei numerischen Funktionen, existieren schon Bibliotheken mit wieder verwendbarer Software, die auch erfolgreich eingesetzt werden. Jedoch ist der Einsatz nicht automatisch unterstützt, d.h. er basiert nicht auf formalen Beschreibungen der Bibliotheksfunktionen und der gewünschten Funktionen. In der Praxis kennt der Programmierer den Inhalt dieser Bibliotheken mehr oder weniger und verwendet deshalb nur Funktionen wieder, von denen er weiß oder vermutet, daß sie in der Bibliothek vorhanden sind. Dieser Wiedergewinnungsansatz ist auf relativ kleine und überschaubare Bibliotheken beschränkt. Die Entwicklung unter Einsatz von großen Softwarebibliotheken, die die Programmiereffizienz erheblich steigern, muß deshalb automatisch unterstützt werden.

Bisherige automatische Lösungsansätze zur automatischen Unterstützung der Softwarewiedergewinnung basieren im allgemeinen auf dem Schlüsselwortansatz. Der Benutzer hat hierbei nicht die Möglichkeit, beliebige Input/Output-Bedingungen aus der Entwurfsphase zu formulieren, sondern er wird gezwungen, zur Beschreibung von Software bestimmte Namen zu verwenden, in denen nur einzelne Aspekte dieser Bedingungen, mitunter auch algorithmische Ideen, zum Ausdruck gebracht werden. Es ist klar, daß ein solcher Ansatz prinzipiell unvollständig und fehleranfällig ist. Andererseits bieten diejenigen Wiedergewinnungsverfahren, die eine direkte Formulierung der Semantik von Software erlauben, bisher keine automatische Unterstützung im Umgang mit solchen Beschreibungen. Um diese beiden Extreme zu verdeutlichen, wird im folgenden auf zwei Verfahren kurz eingegangen.

Bei einem ersten Verfahren handelt es sich um ein interaktives Softwarewiedergewinnungssystem für Funktionen (Ruben Prietro- Diaz, Classification of Resuble Modules, in Ted.J.Biggerstaff and Alan J.Perlis,editors,Software Reusability, Vol.1,Concepts and Moduls, Chapter 4, pages 99-123,ACM Press,GTE Laboratories, 1989). Zur Beschreibung der Funktionen wird dabei ein Tupel eingesetzt, indem an jeder Position eine bestimmte Eigenschaft der Funktion durch ein einziges Schlüsselwort spezifiziert werden muß. Im einzelnen müssen die sechs Attribute instanziiert werden, nämlich Name der Funktion; Name der Objekte, die durch die Funktion manipuliert werden; Name des Mediums, auf dem die Aktionen der Funktion ausgeführt werden; Subsystem, in dem diese Funktion Anwendung findet; funktionale Umgebung der Funktion; externe Umgebung, in der das Verfahren eingesetzt wird. Der Benutzer hat in diesem Verfahren nur die Möglichkeit, die vorhandenen Schlüsselwörter in das Tupel einzusetzen und so eine gewünschte Funktion zu spezifizieren. Das Verfahren bearbeitet per Stringvergleich die Anfrage mit den vorhandenen Beschreibungen der Bibliotheksfunktionen und liefert ab einem gewissen Grad der Übereinstimmung eine entsprechende Antwort oder erlaubt eine nachträgliche Abänderung der Schlüsselwörter.

Bei einem zweiten Verfahren (Shmuel Katz, Charles A.Richter and Khe-Sing The.PARIS: a System of Reusing Partially Interpreted Schemas,pages 377-385, ACM Press.1987) wird die Wiederverwendung von teilweise instanziierten Schemata unterstützt, wobei ein Schema ein Skelett eines Programms repräsentiert und eventuell teilweise gefüllt ist. Der Benutzer startet mit dem Ausfüllen eines solchen Schemas, das im wesentlichen aus drei Teilen besteht, den Anwendbarkeitsbedingungen, den Ergebnisbedingungen und einer Liste, die die importierten Objekte enthält. Anhand der geforderten Eigenschaften wird nun aus der Schemabibliothek ein Schema ausgewählt, das den Anforderungen am besten entspricht. Dabei werden in das aktuelle Schema Codeteile eingefügt, und deren Korrektheit mit Hilfe eines interaktiven Beweises überprüft. Die Wiederverwendbarkeit der gefundenen Software ist jedoch nur gewährleistet, wenn es dem Benutzer gelingt, den Beweiser bei dieser Aufgabe richtig zu steuern, was eigentlich nur einem Experten zugemutet werden kann und darf.

Aus Conference Proceedings Fifth Annual International Phoenix Conference On Computers And Communications '86 26.März 1986, Scottsdale, AZ, US, Seiten 445 - 449 ergibt sich ein Verfahren zum Wiederauffinden von Softwaremodulen. Dabei werden die einzelnen Softwaremodule oder Objekte entsprechend ihrer Semantik spezifiziert mit Hilfe von prädikaten logischen Formeln und in einer Biobliothek klassifiziert. Gesucht wird nach einem Objekt in der Bibliothek mit diesen das Suchobjekt beschreibenden prädiaktenlogischen Formeln. Aus der Bibliothek wird das Objekt ausgegeben, dessen prädikatenlogischen Formeln identisch sind mit den prädikatenlogischen Formeln des Suchobjekts. Wird kein derartiges Objekt in der Bibliothek gefunden, dann wird der Beweiser heuristisch verändert, z.B. werden die Parameter geändert, um ein Objekt in der Bibliothek zu finden.

Aus Proceedings Compsac 88 The Twelfth Annual International Computer Software & Applications Conference 5. Oktober 1988, Chicago, I1, US, Seiten 361 - 368 ist bekannt, zum Wiederfinden von Modulen aus einer Bibliothek diese in der Bibliothek baumartig zu klassifizieren ausgehend von einem allgemeinen Startobjekt. Einem Objekt mit komplexer Funktion werden z.B. die Unterobjekte zugeordnet, die Teilfunktionen der komplexen Funktion darstellen. Weiterhin werden einem Objekt mit einer übergeordneten Funktion die Unterobjekte zugeordnet, die alternative Funktionen zu der Funktion des übergeordneten Objektes darstellen. Bei der Suche nach Objekten in der Programmbibliothek werden nur solche Unterobjekte ausgewählt, die eine Teilfunktion der übergeordneten komplexen Funktion ausführen.

Die der Erfindung zugrundeliegende Aufgabe besteht darin, die Nachteile der bekannten Verfahren zu vermeiden. Diese Aufgabe wird gemäß dem Verfahren des Patentanspruches 1 gelöst.

Zum Suchen von Objekten werden diese in der Bibliothek entsprechend ihren prädikatenlogischen Formeln in Klassen eingeordnet. Die Klassifikation erfolgt derart, daß baumartig Ober- und Unterklassen gebildet werden, wobei innerhalb eines Astes das Objekt, dessen Funktion ausgedrückt durch die prädikatenlogischen Formeln die Funktion eines anderen Objektes subsumiert vor dem anderen Objekt im Ast angeordnet wird.

Die Spezifizierung der Funktion eines Objektes erfolgt mit Hilfe der prädikatenlogischen Formeln so, daß eine Vorbedingung formuliert wird, die den Zustand des Objektes vor Ausführung der Funktion kennzeichnet, und eine Nachbedingung, die den Zustand des Objektes nach Ausführung der Funktion darstellt.

Bei der Suche nach einem Objekt in der Bibliothek wird zweckmäßigerweise vom Objekt der obersten Klasse ausgegangen und als Super-Menge das Objekt ausgewählt, das das Subobjekt gerade noch subsumiert (positiver Subsumptionstest).

Weiterhin ist es möglich, bei der Suche nach einem Suchobjekt in der Bibliothek von einem Objekt der niedrigsten Klasse ausgehend als Submenge die Objekte auszuwählen, die vom Suchobjekt am allgemeinsten subsumiert werden.

Wenn die Super Menge mit der Submenge übereinstimmt, dann ist in der Biliothek das gesuchte Objket gefunden worden. Wenn keine Übereinstimmung erreicht wird, dann gibt es das Suchobjekt noch nicht in der Bibliothek, es sind aber Objekte mit ahnlicher Funktion enthalten, die bei der Neuschaffung des Suchobjektes verwendet werden können.

Neben der Kennzeichnung der Objekte durch deren Funktionen ist es möglich, weitere Eigenschaften der Objekte, wie z.B. deren Zeitverhalten, mit Schlüsselworten zu spezifizieren. Diese Schlüsselworte können dann entsprechend in Klassen angeordnet werden und bei der Suche eingesetzt werden.

Besonders günstig ist das erfindungsgemäße Verfahren, wenn in einer Programmbibliothek nach Programmkomponenten gesucht werden soll.

Andere Weiterbildungen der Erfindung ergeben sich aus den Unteransprüchen.

Besonders vorteilhaft ist es, daß die Semantik oder Eigenschaft einer Funktion verwendet wird, um das zugeordnete Objekt zu spezifizieren. Zur Beschreibung der Semantik einer Funktion wird eine sehr mächtige Sprache, nämlich volle Prädikatenlogik verwendet und somit die Möglichkeiten des Schlüsselwortansatzes bei weitem übertroffen. Beim Schlüsselwortansatz werden im allgemeinen ganze Sätze durch einzelne Worte repräsentiert. Wird versucht, für jede denkbar Aussage ein eigenes Wort zu finden, so stößt ein solcher Ansatz naturgemäß bald an seine Grenzen. Erfindungsgemäß wird dagegen versucht, mit den Aussagen über die Semantik einer Funktion direkt zu operieren und gleichzeitig der Benutzer von der mühevollen Aufgabe entbunden, Korrektheitsbeweise interaktiv zu steuern oder selbst zu führen.

Will der Benutzer mit dem Verfahren arbeiten, so formuliert er eine detaillierte Spezifikation der gewünschten Funktion. Weitere Eigenschaften einer Funktion, wie ihre Komplexität oder die gewünschte Implementierungssprache, können konventionell mit Schlüsselwörtern spezifiziert werden. Die primäre Eigenschaft einer Funktion aber, ihre Semantik, (Vor- und Nachbedingungen), beschreibt der Benutzer mit einer prädikaktenlogischen Formel. Das erfindungsgemäße Wiedergewinnungsverfahren startet nun mit einer solchen hybriden Zielspezifikation und sucht in einer vorhandenen Objektbibliothek nach einer passenden Funktion. Zu den einzelnen Attributen der Beschreibung sind die Klassen oder Taxonomien vorhanden, die simultan von einem Klassifizierer bei der Suche nach der geeigneten Funktion abgearbeitet werden. Auch für das Attribut Semantik, das gewissermaßen den Kern jeder Funktionsbeschreibung darstellt, gibt es eine entsprechende Klassifizierung oder Taxonomie. Hier erfordert die Suche nach einer Funktion mit der gewünschten Semantik ein enges Zusammenspiel des Klassifizierers mit einem Theorembeweiser. Gibt es in der Bibliothek ein wiederverwendbares Objekt, so steht am Ende des Klassifikationsprozesses ein Beweis dafür, daß die gesuchte und gefundene Funktion dieselbe oder eine ähnliche Semantik haben. Der Theorembeweiser zeigt die Äquivalenz oder eine Implikation der entsprechenden prädikatenlogischen Formel. Allgemein kann man sagen, daß das erfindungsgemäße Verfahren, die Semantik von Funktionen zu vergleichen, viel weiter trägt, als ein syntaktischer Vergleich von Schlüsselwörtern oder Codestücken.

Da zum Vergleich der Semantik von Funktionen ein automatischer Theorembeweiser, nämlich ein Beweiser wie er in R.Letz, J.Schumann und S.Bayerl SETHEO, A Sequential Theoremprover for First order Logic, Technical Report FKI-97-89, TU München, 1989, beschrieben wird, in einem wissensbasierten System eingesetzt wird, besteht ein großer Fortschritt zu den bekannten Objektwiederverwendungsverfahren.

In der Kopplung eines wissensbasierten Systems mit dem verwendeten Beweiser kommen somit neuartige Techniken zum Einsatz. Bei der Suche nach Objekten in einer Objektbibliothek wird die Funktionalität des Systems erweitert, weil mehr wiederverwendungsfähige Software wiedergefunden wird; zum anderen wird es dem Benutzer ermöglicht, seine Anforderungen nicht nur durch Schlüsselworte formulieren zu können.

Im weiteren wird die Erfindung unter Verwendung von Ausführungsbeispielen weiter erläutert. Dabei sind die Objekte Programmkomponenten, die in einer Programmkomponenten bibliothek angeordnet sind und nach denen gesucht wird.

Die Sprache, die der Benutzer eines Wiedergewinnungsverfahrens verwendet, sollte einerseits natürlich, leicht erlernbar, andererseits ausdrucksstark genug sein, um die Semantik von Funktionen sowie eine Reihe anderer Askpekte formulieren zu können. Idealerweise sollte sie mit der Sprache übereinstimmen, in der der Programmierer Software Spezifiziert, bevor er daran geht, diese Spezifikationen in ein Programm umzusetzen.

Zur Beschreibung der Semantik von Funktionen (wie auch der Implementierungssprache) wird im Ausführungsbeispiel Aussagenlogik als Spezialfall der Prädikatenlogik, verwendet. Es ist dies ein Ansatz, der insoweit über den Schlüsselwortansatz hinausgeht, als es möglich ist, die Wörter mit Hilfe von logischen Konnektoren ( , v, →, ↔) zu Sätzen zu verbinden. Wenn ein hinreichend großes aussagenlogisches Vokabular zur Verfügung steht, wird eine Ausdrucksstärke erreicht, die zu einer Charakterisierung von Softwarekomponenten ausreichend ist. Je mehr Vokabular zur Verfügung steht, desto mehr Eigenschaften, Gruppen und Kombinationen von Eigenschaften lassen sich in einem Wort niederschreiben. Sowohl der Benutzer wie auch der Systembetreuer haben dabei die Möglichkeit, am Vokabular Erweiterungen vorzunehmen. Dem Systembetreuer steht die Möglichkeit offen, den Basiswortschatz zu erweitern, der Benutzer hat die Möglichkeit neue Begriffe mit Hilfe alter Begriffe zu definieren.

Neben der Möglichkeit, semantische Eigenschaften von Funktionen mit Aussagenlogik zu spezifizieren, gibt es weiter die Möglichkeit, andere Attribute, wie etwa die Zeitkomplexität einer solchen Funktion mit Schlüsselworten zu beschreiben. Damit kann der Benutzer eingeben, ob er die Funktion mit konstanter, logarithmischer, linearer oder quadratischer Zeitkomplexität wünscht. Dabei ist zu beachten, daß der Schlüsselwortansatz einen Sonderfall des aussagelogischen Ansatzes darstellt, weil Schlüsselworte atomare Aussagen logischer Formeln mit nur einer Variablen sind.

Um die Suche zu beschleunigen, ist es zweckmäßig, daß die Programmkomponenten in der Programmbibliothek klassifiziert sind. Durch die Klassifikation oder Taxonomie werden die Programmkomponenten zu Klassen zusammengefaßt, wobei eine Klasse durch die Eigenschaften definiert ist, die alle Objekte dieser Klasse gemeinsam haben. Die Klassen werden auch als abstrakte Konzepte bezeichnet -abstrakt deswegen, weil sie einen Teil der konkreten Beschreibung vernachlässigen. In weiteren Schritten können dann die Klassen der ersten Stufe wiederum zu Klassen höheren Abstraktionsgrades zusammengefaßt werden. Ein wichtiger Aspekt bei Taxonomien ist, daß sich die Beschreibungsmerkmale nach unten hin, d.h. zu den Unterklassen hin, vererben. Dementsprechend ergibt sich eine redundanzfreie Notation von Objekten, wenn deren gemeinsame Eigenschaften nur in den Oberklassen beschrieben werden.

Eine entsprechende Klassifikation kann nun für funktionale Beschreibungen von Objekten, wie Bauteilen oder Programmkomponenten, durchgeführt werden. Die zur Beschreibung der Funktionen verwendeten aussagenlogischen Formeln werden zu dieser Klassifikation herangezogen, wobei die Formeln jeweils mehrere Teilformeln beinhalten können. Ein Beispiel für eine derartige Klassifikation der Funktionalitäten von Operationen im Bereich der Datenstrukturmanipulation kann Tabelle 1 entnommen werden. Hier treten als Knoten nur die abstrakten Objektbezeichner auf und nicht deren Definitionen in Form von aussagenlogischen Formeln.

## Tabelle 1

Der Darstellung nach Tabelle 1 kann die Aufteilung von Funktionen entnommen werden, wobei in der obersten, also linken, Stufe S1 zwischen Funktionen unterschieden wird, die Objekte in Datenstrukturen abspeichern (put); solchen, die Objekte aus Datenstrukturen hervorbringen (get); Testfunktionen auf Datenstrukturen (ex_self, isfull und is_empty) sowie Initialisierungsfunktionen (create). Die Funktionen zum Abspeichern und Wiedergewinnen können noch verfeinert werden. Die Struktur dieser Aufteilung entspricht bis auf die letzte Stufe SB einem Baum, im allgemeinen Fall wird hier jedoch ein gerichteter Graph entstehen. Die letzte Stufe SB enthält genau eine zusätzliche virtuelle Klasse, die somit Unterklasse von allen anderen ist. Dieses Konzept wird nur für die im folgenden Abschnitt beschriebene Abarbeitung solcher Taxonomien benötigt.

Die Objekte oder Programmkomponenten der Tabelle 1 können, z.B. bezogen auf eine Datenbank, bedeuten, daß die Datenbank leer ist (is-empty), oder voll ist (is_full) oder neu geschaffen wird (create) oder besteht (ex_self) oder Daten aus der Datenbank geholt werden (get) oder Daten in die Datenbank hineingebracht werden (put). Die geschilderten Objekte liegen in der Stufe S1 und bilden die oberste Klasse. Die Funktionen get und put können weiter unter teilt werden, wie es Tabelle 1 entnehmbar ist. Im Ausführungsbeispiel sind dabei noch Klassen S2, S3, S4 vorgesehen. Die Funktionen der Klassen S2, S3, S4 können der Tabelle 1 entnommen werden. Es wird noch einmal darauf hingewiesen, daß die Funktionen der Tabelle 1 für die Objekte oder Programmkomponenten stehen, die diese Funktionen realisieren.

Die Funktionen der Tabelle 1 werden nun mit Hilfe von aussagenlogischen Formeln in Tabelle 2 beschrieben. Diese Formeln zur Semantikbeschreibung bestehen aus einem Vorbedingungsteil und einem Nachbedingungsteil. Die Formeln sind in Präfixnotation dargestellt, d.h. in der Form: (Operator, Operand_1, Operand_2 ... Operand_n).

Die entsprechende Infix-Schreibweise, etwa von put lautet:

Vorbedingung:  **ex_self**  **(not eq_self_full) in_order_self**
Nachbedingung:  **ex_selfn**  **memb_elem_selfn**

Die umgangssprachliche Beschreibung der angegebenen Formel lautet: Die Datenstruktur (self) existiert und sie ist noch nicht voll und die Datenstruktur ist geordnet. Für die entstehende (abgeänderte) Datenstruktur gilt nach Anwendung einer Funktion, die z.B. dem Objekt put entspricht, daß sie existiert und daß das einzufügende Element (elem) wirklich Element der nachfolgenden Datenstruktur ist.

Der Vererbungsaspekt, der implizit in Tabelle 1 durch die Subklassenbeziehung (Subsumptionsbeziehung) gegeben ist, wird formal im Falle der aussagenlogischen Formeln durch die logische Implikation realisiert. Für diese logischen Formeln gilt:

Konzept$_{super}$subsumiert Konzept$_{sub}$ g.d.w.

$$(\text{Precondition}_{super} \rightarrow \text{Precondition}_{sub})$$

$$((\text{Precondition}_{super}\ \text{Postcondition}_{sub}) \rightarrow \text{Postcondition}_{super})$$

Wären die Objekte durch eine Auflistung von Eigenschaften realisiert, würde die Subklassenbeziehung formal über die Teilmengenrelation der Eigenschaftslisten definiert sein.

## Tabelle 2

| Name | Formel für Vorbedingung |
|---|---|
| | Formel für Nachbedingung |
| top_function_semantic | false |
| | true |
| create | (not ex_self) |
| | (and ex_selfn eq_self_null) |
| put | (and ex_self <br> (not eq_self_full) <br> in_order_self) |
| | (and ex_selfn memb_elem_selfn) |
| put_dupl | (and ex_self in_order_self) |
| | (and ex_selfn <br> memb_elem_selfn <br> socc_elem_selfn_self) |
| put_nodupl | (and ex_self in_order_self) |
| | (and ex_selfn <br> memb_elem_selfn <br> (or (and memb_elem_self <br> eq_occ_elem_self_selfn) <br> (and (not memb_elem_self) <br> socc_elem_selfn_self))) |
| put_nodupl_first | ex_self |
| | (and ex_selfn <br> memb_elem_selfn <br> (or (and memb_elem_self <br> eq_occ_elem_self_selfn) <br> (and (not memb_elem_self) <br> socc_elem_selfn_self)) <br> eq_elem_first_selfn <br> eq_self_rest_selfn) |
| bottom_function_semantic | true |
| | false |

Aus Tabelle 2 ergibt sich nun die Beschreibung eines Teiles der Funktionen der Tabelle 1 mit Hilfe aussagenlogischer Formeln. Die Bedeutung der einzelnen Ausdrücke, die in Tabelle 2 verwendet werden, sind im Anhang erläutert. Mit Hilfe dieser Erläuterung können die aussagenlogischen Formeln für die Vorbedingung und die Nachbedingung interpretiert werden.

Die Strukturierung und formale Darstellung der Objekte innerhalb der Objektbibliothek haben neben dem Ordnungsaspekt zusätzlich den der automatischen Abarbeitbarkeit. Da die Subsumptionsbeziehung zwischen den Objekten zweier Klassen formal definiert ist und außerdem als formale Sprache Aussagenlogik verwendet wird, kann nun mittels des oben zitierten automatischen Theorembeweisers geprüft werden, ob ein gegebenes Objekt ein anderes subsumiert. In dem Wiedergewinnungsverfahren ist diese Eigenschaft einsetzbar, um herauszufinden wie man für ein gegebenes Objekt, das Suchobjekt bzw. dessen Beschreibung, feststellen kann, an welchem Platz es in der Taxonomie einzuordnen ist. Wenn zu dem gegebenen Objekt schon ein äquivalentes existiert, soll genau dieses bestimmt werden, existiert noch keines, sollen zwei spezielle Mengen, die Submenge und die Supermenge, gefunden werden. Dabei enthält die Supermenge alle speziellsten Objekte, die das Suchobjekt noch subsumieren, während die Submenge alle allgemeinsten Objekte enthält, die vom gegebenen Objekt subsumiert werden. Würde das Suchobjekt in die Taxonomie aufgenommen werden, so stünde es zwischen Super- und Submenge.

Der allgemeine Klassifizierungsalgorithmus läßt sich entsprechend diesen beiden Mengen aufteilen. Zunächst wird das Vorgehen betrachtet, um die Supermenge zu bestimmen. Startpunkt ist hierbei das oberste Objekt ST. Eine Subsumptionsprüfung besteht immer aus dem Test, ob das jeweilige Objekt der Taxonomie das Suchobjekt subsumiert.

Die Supermenge ist am Anfang leer. Gelingt der Subsumptionstest für ein Objekt der obersten Klasse, so wird es in die Supermenge aufgenommen. In Folge werden alle direkten Unterklassen getestet. Gelingt ein Test für ein Objekt der Unterklasse, so wird es in die Supermenge aufgenommen, wobei das Objekt der dazugehörigen Oberklasse wieder aus der Supermenge entfernt wird. Gelingt der Subsumptionstest für keine Objekte der direkten Unterklasse der Taxonomie, so bleibt dieses Objekt in der Supermenge bestehen und der darunterliegende Teilast der Taxonomie wird nicht weiter untersucht. Dieses Vorgehen wird rekursiv auf der Taxonomie nach unten hin fortgeführt, bis keine Änderungen der Supermenge mehr möglich sind.

Die Bestimmung der Submenge geschieht spiegelbildlich, wobei das unterste virtuelle Objekt SB nun Startpunkt ist und die Subsumptionsprüfung aus dem Test besteht, ob das Suchobjekt das jeweilige in der Taxonomie subsumiert. Die Submenge ist am Anfang leer. Gelingt der Subsumptionstest für ein Objekt der untersten Klasse, so wird es in die Submenge aufgenommen. In folge werden alle direkten Oberklassen getestet. Gelingt ein Test für ein Objekt einer Oberklasse, wird es in die Submenge aufgenommen, wobei die dazugehörigen Objekte der Unterklasse wieder aus der Submenge entfernt werden. Gelingt der Subsumptionstest zu keiner Oberklasse der Taxonomie, so bleibt dieses Objekt in der Submenge bestehen und der darüber liegende Teilast der Taxonomie wird nicht weiter untersucht. Dieses Vorgehen wird rekursiv auf der Taxonomie nach oben hin fortgeführt, bis keine Änderungen der Submenge mehr möglich sind.

Bei bestimmten Aufbaustrukturen einer Taxonomie kann dieses zweigleisige Vorgehen optimiert werden, d.h. man bestimmt zuerst die Supermenge und bestimmt direkt von dieser Menge ausgehend die Submenge, was zu einer Halbierung der Komplexität des Klassifizierens führen kann.

Ist ein äquivalentes Objekt in der Taxonomie bereits vorhanden, ist die Submenge gleich der Supermenge und enthält genau dieses Objekt der Taxonomie.

Im folgenden wird mit Hilfe eines Beispieles das Verfahren noch ausführlicher erläutert. Der Benutzer gibt dem System eine Spezifikation in Form eines ausgefüllten Spezifikationsschemas nach Tabelle 3 ein. Dabei werden die Eigenschaften der gewünschten Softwarekomponente in Form von Attributwerten beschrieben. Die Attributwerte können allgemeine Zeichenketten sein (Name), Zahlen oder speziellere Konstrukte, wie etwa ein Datum oder die logischen Formeln unter dem Attribut Semantik. Attribute, die für das Suchen nicht wichtig sind, oder die der Benutzer nicht näher spezifizieren will, bleiben frei.

## Tabelle 3

```
instance-of    function-specification
name:          my-insert
version:
date:
author:        Goofy
syntax:        my-insert(Elem,Old,New)
input-types:   (Elem:ANY),(Old:SET)
output-types:  (New:SET)
semantics:
    precond:   ex-self ∧ (not equal-self-null) ∧ in-order-self
    postcond:  ex-selfn ∧ member-elem-selfn
time-compl:    linear
impl-lang:
    ...
code
```

Nach Tabelle 3 wird, wie aus der aussagenlogischen Formel des Semantik-Attributs hervorgeht, eine my-insert ( )-Funktion gesucht. Diese Funktion ist sicher nicht vollständig beschrieben, d.h. die logische Formel bezeichnet eine ganze Klasse von Funktionen. Ein Vergleich mit Tabelle 2 zeigt, daß die aussagenlogischen Formeln denen der Programmkomponente put entspricht.

Der Benutzer kann alle Attribute des Spezifikationsschemas ausfüllen. In unserem Fall interessieren uns nur die Attribute Semantik, implementation-language und time complexity. Für jedes Attribut existiert dementsprechend eine Taxonomie für deren Attributwerte entsprechend Tabelle 1.

Nachdem der Benutzer das Anfangsschema nach Tabelle 3 ausgefüllt hat und die relevanten Attribute bestimmt sind, wird die Suchaufgabe oder Retrieval-Aufgabe zerteilt. Dazu werden die relevanten Attributwerte nun an geeignete Klassifizierer weitergegeben, die in der entsprechenden Taxonomie den konkreten Attributwert klassifizieren.

In jeaer Teilaufgabe wird der konkrete Attributwert nach dem oben angegebenen Klassifikationsalgorithmus klassifiziert und somit ein passendes Objekt in der Taxonomie bestimmt. Als Besonderheit sind hier Taxonomien zu betrachten, die aus logischen Formeln aufgebaut sind, wie etwa die SemantikTaxonomie aus Tabelle 1.

Da die Semantik-Attributwerte logische Formeln sind und die formale Definition der Subsumptionsbeziehung auf diese dementsprechend eine logische Implikation enthält, benötigt die Subsumptionsprüfung einen Theorembeweiser wie er oben angegeben ist. Der Theorembeweiser wird somit als Subkomponente im Klassifizierer verwendet und bei jeder Subsumptionsprüfung aufgerufen.

Um das obige Beispiel fortzuführen, sei hier der Klassifikationsvorgang nochmals in wenigen Schritten beschrieben: Das Verfahren startet also in der Semantik-Taxonomie nach Tabelle 1 mit der Anforderung des Benutzers, d.h. mit der Vor- und Nachbedingung von my-insert. Die erste Teilaufgabe besteht in der Bestimmung der Supermenge von Objekten in der Taxonomie (s. Tabelle 1 und Tabelle 2). Ausgehend von dem allgemeinsten Objekt top-function Semantik ST wird getestet, ob die Semantik Definition von my-insert subsumiert wird. Es wird angenommen, dies sei für top function bereits erfolgreich gewesen, sodaß nun die Objekte der nächst tieferen Abstraktionsebene S1 überprüft werden. Für das Objekt create etwa entsteht entsprechend der oben angegebenen Subsumptions-Definition folgende Beweiseraufgabe:

$Objekt_{create}$ subsumiert $Objekt_{my\text{-}insert}$ g.d.w.

$(Precondition_{create} \rightarrow (Precondition_{my\text{-}insert})$

$((Precondition_{create}$ $Postcondition_{my\text{-}insert}) \rightarrow Postcondition_{create}$

und konkret:

(not ex_self) → (ex_self (not eq_self-null) in_order_self)

((not ex_self) (ex_selfn memb_elem_selfn)) → (ex_selfn eq_self_null)

In diesem Fall kann leicht festgestellt werden, daß die Beweisaufgabe nicht gelingen kann, da etwa im zweiten Teil eq_self_null impliziert werden soll, dies unter den gegebenen Bedingungen aber nicht möglich ist.

Für den Klassifikationsalgorithmus bedeutet dieses negative Ergebnis, daß das Objekt create nicht in die Supermenge aufgenommen wird und daß die Objekte des entsprechenden Astes nicht weiter untersucht werden müssen.

Als einer der nächsten Schritte wird der Subsumptionstest für das Objekt put ausgeführt. Wie bereits angegeben, entsprechen sich die aussagenlogischen Formeln für my-insert und put, sodaß hier ein positiver Subsumptionstest vorliegt, damit wird das Objekt put in die Supermenge aufgenommen und dafür das Objekt ST entfernt. Ausgehend von dem Objekt put werden dessen Äste untersucht um festzustellen, ob Objekte niederer Klassen ebenfalls die Suchbedingung erfüllen.

Zur Erläuterung soll nur noch ein Test des Objektes put nodupl geschildert werden. Die Beweiseraufgabe stellt sich analog zur obigen Definition:

(ex_self in_order_self) → (ex_self (not eq_self_null) in_order_self)

((ex_selfn in_order_self) (ex_selfn memb_elem_selfn))

→ (ex_selfn memb_elem_selfn

((memb_elem_self eq_occ_elem_self_selfn)

((not memb_elem_self) socc_elem_self_selfn))

Auch hier kann aufgrund der ersten beiden Zeilen erkannt werden, daß der Beweis nicht gelingen kann, da (not eq_self_null) nicht gefolgert werden kann. Da der Test für das Konzept put_dupl ebenfalls negativ ausfällt, werden keine weiteren Konzepte mehr in die Supermenge aufgenommen und der erste Teil des Klassifikationsvorgangs endet. Analog werden die Tests zur Bestimmung der Submenge von dem virtuell speziellsten Objekt SB gestartet. Der zweite Teil resultiert in der Submenge, die genau das Konzept put enthält.

Das Ergebnis des Klassifikationsvorgangs ist im günstigsten Fall ein äquivalentes Objekt, im ungünstigsten Fall zwei Mengen, die Supermenge und die Submenge. Da die Subsumptionsbeziehungen der Taxonomien so gewählt wurden, daß sie mit der Wiederverwendbarkeitsbeziehung übereinstimmt, kann aus dem Er-

EP 0 603 228 B1

gebnis der Klassifikation auch in ungünstig sten Fall Nutzen gezogen werden. Wie bereits angemerkt wurde, existiert kein äquivalentes Objekt in der Taxonomie, das a priori verwendbar wäre. Jedoch sind alle Objekte der Submenge, sowie deren Unterklassen, wieder verwendbar, da sie Spezialisierungen der gewünschten Objekte sind, somit die ungenaueren oder leichteren Anforderungen erfüllen. Dies trifft für die Objekte der Supermenge nicht zu, da sie evtl. nur Teile der Anforderungen des Benutzers erfüllen.

Aufgrund der Klassifizierung ist der entsprechende Platz in den verschiedenen Taxonomien also bestimmt. Da jedoch die Suchobjekte in der Taxonomie nicht immer reale Gegenstücke in der Bibliothek haben, müssen Spezialisierungen dieser Objekte gesucht werden. Dazu enthalten die Taxonomien nicht nur die Definitionen der Objekte, etwa die logischen Formeln, sondern auch noch Verweise auf konkrete Software-Komponenten in der Bibliothek. Dies kann dazu führen, daß zwar ein äquivalentes Objekt in der Taxonomie gefunden wurde, davon jedoch, und eventuell auch von Spezialisierungen davon, keine realen Bibliothekskomponenten zu finden sind. In diesem Fall ist der Suchprozeß nicht abzubrechen, sondern er sollte in einer möglichst ähnlichen Komponente resultieren. Der Begriff der Ähnlichkeit wird ebenfalls über die Taxonomie bestimmt. Dazu wird die Länge des kürzesten Pfades über die speziellste gemeinsame Oberklasse zwischen zwei Objekten verwendet.

Das Verfahren liefert nach der Bearbeitung der Anfrage eine Spezifikation einer Softwarekomponente aus der Bibliothek zurück. Für die oben angegebene Anfrage nach Tabelle 3 liefert das System z.B. folgende Spezifikation:

Tabelle 4

## Tabelle 4

```
instance-of      function-specification
member-of        put_nodupl_first
name:            set-insert
module:          Set
version:         1.3
date:            28.11.88
author:          Dagobert
syntax:          set-insert(Elem,Old,New)
input-types:      (Elem:ANY),(Old:SET)
output-types:     (New:SET)
semantics:
    precond:     ex-self ∧ in-order-self
    postcond:    ex-selfn ∧ memb-elem-selfn
                 ∧ ( ( memb-elem-self ∧ eq-occ-elem-self-selfn )
                       ∨ ( not memb-elem-self ∧ socc-elem-selfn-self )
                 ∧ eq-elem-first-selfn ∧ eq-self-rest-selfn

time-compl:      linear
impl-lang:       C
    ...
code             ...
```

Diese Bibliothekskomponente gehört, laut dem Attribut **member-of**, dem Objekt **put_nodupl_first** an und ist somit eine Spezialisierung des abstrakten Konzepts **put**.

Wären in der Bibliothek keine Spezialisierungen von **put** zu finden, würden dem Benutzer noch weitere Bibliothekseinträge aus anderen Teilästen der Taxonomie angeboten, die nach einem speziellen Abstandsmaß, das über die Taxonomie definiert ist, der Ähnlichkeit nach geordnet sind.

Anhang

Beschreibung der Schluesselwoerter:
(Die Objekte, die dabei auftreten sind:
SELF: Das Objekt vor Anvendung der Funktion.
SELFN: Das Objekt nach Anwendung der Funktion.
ELEM: Das Objekt, das in die Datenstruktur eingefuegt werden soll.)
        SOCC_ELEM_SELFN_SELF :
Das Element kommt im Folgeobjekt SELFN einmal weniger vor als in SELF
        SOCC_ELEM_SELF_SELFN:

9

Das Element kommt im Folgeobjekt SELFN genau einmal mehr vor als inSELF

EQ_OCC_ELEM_SELF_SELFN :

Das Element kommt im Folgeobjekt SELFN und im Ausgangsobjekt SELF gleich oft vor.

EQ_SELFN_LEAD_SELF :

Das Folgeobjekt SELFN is Praefix vom Ausgangsobjekt SELF.

EQ_SELF_LEAD_SELFN :

Das Ausgangsobjekt SELF istdes Folgeobjekts SELFN.

EQ_SELFN_REST_SELF :

Das Folgeobjekt SELFN ist gleichdem Rest vom Ausgangsobjekt SELF.

EQ_SELF_REST_SELFN :

Das Ausgangsobjekt SELF ist gleichdem Rest des Folgeobjekts SELFN.

EQ_ELEM_LAST_SELFN : Das Element ist im Folgeobjekt SELFN an letzter Stelle.

EQ_ELEM_FIRST_SELFN :

Das Element ist im Folgeobjekt SELFN an erster Stelle.

EQ_ELEM_LAST_SELF :

Das Element ist an letzter Stelle im Ausgangsobjekt SELF.

EQ_ELEM_FIRST_SELF :

Das Element ist an erster Stelle im Ausgangsobjekt SELF.

MEMB_ELEM_SELFN :

Das Element ist im FolgeobjektSELFN vorhanden.

MEMB_ELEM_SELF :

Das Element ist im Ausgangs-objekt SELF vorhanden.

IN_ORDER_SELFN :

Das Folgeobjekt SELFN ist geordnet.

IN_ORDER_SELF :

Das Ausgangsobjekt SELF istgeordnet.

EQ_RES_FALSE :

Das Resultat der boolschen Funktion ist FALSE.

EQ_RES_TRUE :

Das Resultat der boolschenFunktion ist TRUE.

EQ_SELFN_FULL :

Das Folgeobjekt SELFN ist voll (kann nichts mehr auf-nehmen).

EQ_SELF_FULL :

Das Ausgangsobjekt SELF istvoll.

EQ_SELFN_NULL :

Das Folgeobjekt SELFN ist leer.

EQ_SELF_NULL :

Das Ausgangsobjekt SELFist leer.

EQ_SELF_SELFN :

Ausgangs- und Folgeobjekt sind gleich.

EX_SELFN :

Das Ausgangsobjekt SELF muss existieren.

## Patentansprüche

1. Verfahren zum Suchen nach einem mit einem Suchobjekt identischen oder ähnlichen Objekt in einer Objektbibliothek durch einen Rechner,

a) bei dem die Objekte in der Bibliothek derart klassifiziert werden, daß sie ausgehend von einem allgemeinen Startobjekt entsprechend ihrer prädikatenlogischen Formeln derart in Ober- und Unterklassen baumartig angeordnet werden, daß ein Objekt, dessen prädikatenlogische Formeln nur von den Formeln des Startobjektes subsumiert werden, in einer ersten Klasse hinter dem Startobjekt angeordnet wird, daß ein Objekt, dessen prädikatenlogischen Formeln von den prädikatenlogischen Formeln eines anderen bereits klassifizierten Objektes subsumiert wird, in einem gemeinsamen Ast in einer niederen Klasse nachgeordnet wird und dies solange durchgeführt wird, bis alle Äste in einem gemeinsamen virtuellen Objekt enden,

b) bei dem die Semantik jedes Objektes durch eine eine Vorbedingung und eine Nachbedingung aufweisende prädikatenlogische Formel spezifiziert wird, wobei die Vorbedingung den Zustand vor Ausführung der Funktion des Objektes, die Nachbedingung den Zustand nach Ausführung der Funktion darstellt,

c) bei dem nach einem Objekt in der Bibliothek mit der das Suchobjekt beschreibenden prädikatenlogischen Formel gesucht wird, wobei ausgehend vom Startobjekt als Supermenge die Objekte ausgewählt werden, die das gesuchte Objekt subsumieren (positiver Subsumptionstest) und/oder vom virtuellen Objekt ausgehend als Submenge die Objekte ausgewählt werden, die vom Suchobjekt am allgemeinsten subsumiert werden (negativer Subsumptionstest),

d) und bei dem als Ergebnis der Suche das Objekt aus der Bibliothek ausgegeben wird, dessen prädikatenlogischen Formeln identisch sind mit den prädikatenlogischen Formeln des Suchobjektes, sonst die Objekte ausgegeben werden, deren prädikatenlogischen Formeln die prädikatenlogischen Formeln des Suchobjektes subsumieren und/oder die Objekte ausgegeben werden, deren prädikatenlogischen Formeln von den prädikatenlogischen Formeln des Suchobjektes subsumiert werden.

2. Verfahren nach Anspruch 1,

a) bei dem zu Beginn des Suchvorgangs die Supermenge leer ist,

b) bei dem mit den auf das Startobjekt folgenden Objekten in der obersten Klasse gestartet wird und ein Vergleich mit dem Suchobjekt auf Ähnlichkeit durchgeführt wird und bei positiven Subsumptionstest diese Objekt in die Supermenge eingefügt werden,

c) bei dem anschließend die Objekte untersucht werden, die den in Schritt b) gefundenen Objekten unmittelbar folgen und bei positivem Subsumptionstest diese Objekte anstatt der vorhergehenden im selben Ast liegenden Objekte der obersten Klasse in die Submenge eingefügt werden und dies solange fortgesetzt wird, bis ein Test für die nächste Unterklasse negativ ist.

3. Verfahren nach Anspruch 2,

a) bei dem zu Beginn des Suchvorgangs die Submenge leer ist,

b) bei dem mit den dem virtuellen Objekt vorhergehenden Objekten der untersten Klasse gestartet wird und ein Vergleich mit dem gesuchten Objekt auf Ähnlichkeit durchgeführt wird und bei positivem Subsumptionstest dieses Objekt in die Submenge eingefügt werden,

c) bei dem anschließend die Objekte untersucht werden, die den in Schritt b) gefundenen Objekten unmittelbar folgen, und bei positivem Subsumptionstest diese Objekte anstatt der nachfolgenden in denselben Ästen liegenden Objekte der untersten Klasse in die Submenge eingefügt werden und dies solange fortgesetzt wird, bis ein Test für die nächste Oberklasse negativ ist.

4. Verfahren nach Anspruch 2 oder 3,

bei dem zuerst die Supermenge bestimmt wird und davon ausgehend die Submenge bestimmt wird.

5. Verfahren nach einem der vorhergehenden Ansprüche,

bei dem weitere Eigenschaften der Objekte mit Schlüsselwörtern spezifiziert werden.

6. Verfahren nach einem der vorhergehenden Ansprüche,

bei dem die Objekte Programmkomponenten sind und die Semantik der in den Programmkomponenten enthaltenen Algorithmen beschrieben wird.

## Claims

1. Process for searching for an object similar or identical to a search object in an object library using a computer,

a) wherein the objects are classified in the library in such a way that they are arranged, starting from a general start object, in accordance with their predicate logic formulas in superordinate classes and subclasses in the form of a tree in such a way that an object whose predicate logic formulas are subsumed only by the formulas of the start object is arranged in a first class following the start object, that an object whose predicate logic formulas are subsumed by the predicate logic formulas of another already classified object is arranged thereafter in a lower class in a common branch, and this is performed until all branches end in a common virtual object,

b) Wherein the semantics of each object are specified by a predicate logic formula having a precondition and a postcondition, wherein the precondition represents the state before execution of the function of the object, and the postcondition represents the state after execution of the function,

c) wherein a search is made for an object in the library with the predicate logic formula describing the search object, wherein, starting from the start object, the objects that subsume the search object are selected as the superset (positive subsumption test) and/or, starting from the virtual object, the objects that are subsumed the most generally by the search object are selected as the subset (negative subsumption test),

d) and wherein as a result of the search the object whose predicate logic formulas are identical to the predicate logic formulas of the search object is output from the library, and otherwise the objects are output whose predicate logic formulas subsume the predicate logic formulas of the search object, and/or the objects are output whose predicate logic formulas are subsumed by the predicate logic formulas of the search object.

2. Process according to Claim 1,
a) wherein the superset is empty at the beginning of the search operation,
b) wherein a start is made with the objects following the start object in the highest class and a comparison for similarity is made with the search object, and in the case of a positive subsumption test said objects are inserted in the superset,
c) wherein the objects that directly follow the objects found in step b) are subsequently examined, and in the case of a positive subsumption test said objects are inserted in the subset instead of the preceding objects of the highest class lying in the same branch, and this is continued until a test for the next subclass is negative.

3. Process according to Claim 2,
a) wherein the subset is empty at the beginning of the search operation,
b) wherein a start is made with the objects of the lowest class preceding the virtual object and a comparison for similarity is made with the search object, and in the case of a positive subsumption test said objects are inserted in the subset,
c) wherein the objects that directly follow the objects found in step b) are subsequently examined, and in the case of a positive subsumption test said objects are inserted in the subset instead of the following objects of the lowest class lying in the same branches, and this is continued until a test for the next superordinate class is negative.

4. Process according to Claim 2 or 3, characterized in that first the superset is determined and starting from that the subset is determined.

5. Process according to one of the preceding claims, wherein further properties of the objects are specified with keywords.

6. Process according to one of the preceding claims, wherein the objects are program components and the semantics of the algorithms contained in the program components are described.

**Revendications**

1. Procédé pour rechercher un objet identique ou semblable à un objet de recherche, dans une bibliothèque d'objets au moyen d'un ordinateur, selon lequel

a) on classe les objets dans la bibliothèque de manière qu'ils soient disposés, à partir d'un objet général de départ, conformément à leurs formules logiques de prédiction, au moyen d'une structure arborescente selon des classes supérieures et inférieures, qu'on dispose un objet, dont les formules logiques de prédiction sont incluses uniquement dans les formules de l'objet de départ, dans une première classe derrière l'objet de départ, qu'on dispose un objet, dont les formules logiques de prédiction sont comprises dans les formules logiques de prédiction d'un autre objet déjà classé, dans une classe d'un niveau plus faible dans une branche commune et qu'on exécute ceci jusqu'à ce que toutes les branches se terminent par un objet virtuel commun,

b) on spécifie la cémentique de chaque objet au moyen d'une formule logique de prédiction, qui possède une condition préalable et une condition ultérieure, la condition préalable représentant l'état avant l'exécution de la fonction de l'objet, et la condition ultérieure représentant l'état après l'exécution de la fonction,

c) on effectue une recherche en arrière d'un objet dans la bibliothèque, avec la formule logique de prédiction qui décrit l'objet de recherche, auquel cas, à partir de l'objet de départ, on sélectionne en tant que super-quantité, les objets qui incluent l'objet recherché (test positif d'inclusion) et/ou on sélectionne en tant que quantité partielle, à partir de l'objet virtuel, les objets qui sont englobés de la manière la plus générale par l'objet de recherche (test d'un négatif d'inclusion),

d) et, en tant que résultat de la recherche, à partir de la bibliothèque est délivré l'objet dont les formules logiques de prédiction sont identiques aux formules logiques de prédiction de l'objet de recherche, sinon les objets délivrés sont ceux, dont les formules logiques de prédiction incluent les formules logiques de prédiction de l'objet de recherche et/ou les objets délivrés sont ceux, dont les formules logiques de prédiction sont contenues dans les formules logiques de prédiction de l'objet de recherche.

2. Procédé suivant la revendication 1, selon lequel

a) la super-quantité est vide au début de l'opération de recherche,

b) on démarre avec les objets qui succèdent à l'objet de départ, dans la classe de niveau la plus élevée et on exécute une comparaison pour déterminer la similitude avec l'objet de recherche et, dans le cas d'un test positif d'inclusion, on introduit cet objet dans la super-quantité,

c) ensuite, on recherche les objets qui succèdent directement aux objets trouvés lors de l'étape b) et, dans le cas d'un test positif d'inclusion, on insère dans la quantité partielle ces objets à la place des objets précédents situés dans la même branche et appartenant à la classe la plus élevée, et on poursuit cette opération jusqu'à ce qu'un test soit négatif pour la classe inférieure immédiatement suivante.

3. Procédé suivant la revendication 2, selon lequel

a) la quantité partielle est vide au début de l'opération de recherche,

b) on commence avec les objets, qui précèdent l'objet virtuel, dans la classe la plus basse et on exécute une comparaison pour déterminer la similitude par rapport à l'objet recherché et, dans le cas d'un test positif d'inclusion, on insère cet objet dans la quantité partielle,

c) ensuite on recherche les objets qui succèdent directement aux objets trouvés lors de l'étape b) et, dans le cas d'un test positif d'inclusion, on insère dans la quantité partielle ces objets à la place des objets suivants qui sont situés dans les mêmes branches et appartiennent à la classe la plus basse, et on poursuit cette opération jusqu'à ce qu'un test pour la classe supérieure immédiatement suivante soit négatif.

4. Procédé suivant la revendication 2 ou 3, selon lequel on détermine tout d'abord la super-quantité et, à partir de là, on détermine la quantité partielle.

5. Procédé suivant l'une des revendications précédentes, selon lequel on spécifie d'autres caractéristiques de l'objet à l'aide de mots clés.

6. Procédé suivant l'une des revendications précédentes, selon lequel les objets sont des composantes d'un programme et la cémentique des algorithmes contenus dans les composantes du programme est décrite.